# EUROPÄISCHE PATENTANMELDUNG

(11) **EP 2 505 340 A1**
(43) Veröffentlichungstag der Anmeldung: **03.10.2012**
(21) Anmeldenummer: 11002737.2
(22) Anmeldetag: 01.04.2011
(51) Int. Cl.: B29C 65/38, B29C 65/74, B65B 51/14, B65D 75/56, B29C 65/22, B65B 61/04

(54) **Folienfügeeinrichtung, Folienbeutel und Verfahren zum Fügen von Folienbahnen**

(71) Anmelder: ROPEX Industrie-Elektronik GmbH, 74321 Bietigheim-Bissingen (DE)
(72) Erfinder: Hupp, Alexander, 75056 Sulzfeld (DE); Peters, Robert, 74321 Bietigheim-Bissingen (DE)
(74) Vertreter: Kocher, Mark Werner

(57) **Zusammenfassung**

Die Erfindung betrifft eine Folienfügeeinrichtung mit einer Impulsheizeinrichtung (2) zur Temperierung von zu fügenden Folienbahnen und mit einem Gegenhalter (3) zur Übertragung von Druckkräften auf die Folienbahnen, wobei die Impulsheizeinrichtung (2) eine temperierbare Arbeitsfläche zur Auflage der zu fügenden Folienbahnen sowie der Arbeitsfläche zugeordnete elektrische Heizmittel (12) umfasst, wobei der Gegenhalter (3), der zur Anlage an der temperierbaren Arbeitsfläche ausgebildet ist, einen formstabilen Träger (4) und eine daran abgestützte, flexible Andruckmatrize (5) mit einer geometrisch an die Arbeitsfläche angepassten Andruckoberfläche umfasst und mit der Arbeitsfläche einen variabel einstellbaren Fügespalt begrenzt und wobei an der Andruckmatrize (5) ein erhaben ausgebildetes Andruckprofil (6,8) vorgesehen ist, das für eine lokale Kompression der zu fügenden, zwischen Arbeitsfläche und Andruckmatrize (5) einzulegenden Folienbahnen ausgebildet ist. Erfindungsgemäß ist vorgesehen, dass das Andruckprofil (6,8) mehrere Profilabschnitte (29,30) aufweist, die beabstandet zueinander angeordnet und für eine Erzeugung wenigstens zweier linienförmiger Fügenähte (21,26) an den Folienbahnen ausgebildet sind.

## Beschreibung

Die Erfindung betrifft eine Folienfügeeinrichtung mit einer Impulsheizeinrichtung zur Temperierung von zu fügenden Folienbahnen und mit einem Gegenhalter zur Übertragung von Druckkräften auf die Folienbahnen, wobei die Impulsheizeinrichtung eine temperierbare Arbeitsfläche zur Auflage der zu fügenden Folienbahnen sowie der Arbeitsfläche zugeordnete elektrische Heizmittel umfasst, wobei der Gegenhalter, der zur Anlage an der temperierbaren Arbeitsfläche ausgebildet ist, einen formstabilen Träger und eine daran abgestützte, flexible Andruckmatrize umfasst und mit der Arbeitsfläche einen variabel einstellbaren Fügespalt begrenzt und wobei an der Andruckmatrize ein erhaben ausgebildetes Andruckprofil vorgesehen ist, das für eine lokale Kompression der zu fügenden, zwischen Arbeitsfläche und Andruckmatrize einzulegenden Folienbahnen ausgebildet ist. Ferner betrifft die Erfindung einen Folienbeutel zur Aufnahme eines Verpackungsguts sowie ein Verfahren zum Fügen von Folienbahnen.

Gemäß einem der Anmelderin bekannten, druckschriftlich nicht verfügbaren Stand der Technik umfasst eine Folienfügeeinrichtung eine Impulsheizeinrichtung und einen Gegenhalter. Dabei weist die Impulsheizeinrichtung eine temperierbare Arbeitsfläche auf, auf der die zu fügenden Folienbahnen aufgelegt werden können. Die Arbeitsfläche kann mit Hilfe von elektrischen Heizmitteln innerhalb einer sehr kurzen Aufheizdauer ausgehend von einer Ruhetemperatur, die beispielsweise einer Umgebungstemperatur entsprechen kann, bis auf eine Fügetemperatur, insbesondere in einem Bereich zwischen 250° C und 350° C, aufgeheizt werden. Mit Hilfe der zugeordneten Kühlmittel kann die Impulsheizeinrichtung innerhalb einer sehr kurzen Abkühldauer anschließend wieder abgekühlt werden. Zur Erzielung eines definierten Fügeergebnisses ist an dem Gegenhalter eine Andruckmatrize angebracht, die ein erhaben ausgebildetes Andruckprofil umfasst, das beim bekannten Stand der Technik geradlinig ausgeführt ist und beispielsweise die Erzeugung einer Flachnaht, bei der die aufeinanderliegenden Folienbahnen miteinander verbunden werden, oder einer Trennnaht, bei der die aufeinanderliegenden Folienbahnen miteinander verbunden und in Folienabschnitte unterteilt werden, für die zu fügenden Folienbahnen ermöglicht. Die Ausprägung der Fügenaht an den zu fügenden Folienbahnen hängt insbesondere vom gewählten Querschnitt des Andruckprofils sowie von der Temperaturführung während des Fügevorgangs und dem minimalen Abstand zwischen Andruckmatrize und Arbeitsfläche ab.

Die Aufgabe der Erfindung besteht darin, eine Folienfügeeinrichtung, einen Folienbeutel und ein Verfahren zum Fügen von Folienbahnen bereitzustellen, die ein verbessertes Fügen von Folienbahnen ermöglichen.

Diese Aufgabe wird gemäß einem ersten Aspekt der Erfindung für eine Folienfügeeinrichtung der eingangs genannten Art mit den Merkmalen des Anspruchs 1 gelöst. Hierbei ist vorgesehen, dass das Andruckprofil mehrere Profilabschnitte aufweist, die beabstandet zueinander angeordnet und die für eine Erzeugung wenigstens zweier linienförmiger Fügenähte an den Folienbahnen ausgebildet sind. Hierdurch kann in einem eng begrenzten Flächenbereich der zu fügenden Folienbahnen auch bei hohen Bearbeitungsgeschwindigkeiten, insbesondere mit hohen Folientransportgeschwindigkeiten für die Folienbahnen zwischen den Fügeschritten, eine zuverlässige Erzeugung von eng zueinander angeordneten Fügenähten erreicht werden. Beispielsweise kann es sich bei den durch das erfindungsgemäße Andruckprofil erzeugbaren Fügenähten um parallel zueinander verlaufende Doppelnähte für eine besonders zuverlässige Verbindung der zu fügenden Folienbahnen handeln, die eng zueinander beabstandet sind und in einem einzigen Fügeschritt erzeugt werden. Alternativ können mit Hilfe des erfindungsgemäßen Andruckprofils Fügenähte mit komplexem geometrischem Verlauf in enger Beabstandung hergestellt werden, die ansonsten nur unter Zugabe von erheblichen Folienüberständen zuverlässig gefertigt werden könnten. Somit ermöglicht die erfindungsgemäße Folienfügeeinrichtung die Herstellung von komplex konturierten und eng beabstandeten Fügenähten, so dass besonders kompakte Fügebereiche erzeugt werden können und der Folienverbrauch reduziert werden kann. Das erfindungsgemäß gestaltete Andruckprofil erlaubt es insbesondere, komplexe Verläufe der linienförmigen Fügenähte, beispielsweise wellenförmige und/oder sich schneidende Fügenähte und/oder ineinander verflochtene Fügenähte, auszubilden. Dadurch wird sowohl in funktionaler als auch in gestalterischer Hinsicht eine verbesserte Verbindung der zu fügenden Folienbahnen erzielt.

Vorteilhafte Weiterbildungen der Erfindung sind Gegenstand von Unteransprüchen.

Zweckmäßig ist es, wenn ein Profilabschnitt zumindest bereichsweise gekrümmt ausgebildet ist, um eine bereichsweise gekrümmte Fügenaht an der Folienbahn auszubilden. Mit Hilfe von zumindest bereichsweise gekrümmt ausgebildeten Profilabschnitten können Fügenähte erzeugt werden, die eine besondere mechanische Belastbarkeit aufweisen, beispielsweise dadurch, dass bei im Wesentlichen gleicher Fläche einer Fügezone eine deutliche Verlängerung der effektiven Fügenahtlänge erreicht wird, indem die Fügenaht bereichsweise gekrümmt, insbesondere wellenlinienförmig, ausgebildet wird. Ergänzend oder alternativ können die Profilabschnitte derart gekrümmt ausgebildet werden, dass ein Auftrennen der Fügenähte innerhalb eines vorgebbaren Bereichs einfach und komfortabel, jedoch außerhalb dieses Bereichs nur mit deutlich erhöhtem Widerstand möglich ist.

Bei einer vorteilhaften Weiterbildung der Erfindung ist vorgesehen, dass wenigstens eines der Andruckprofile aus einem Material hergestellt ist, dessen Materialeigenschaften, insbesondere Elastizitätseigenschaften, von Materialeigenschaften der umgebenden Andruckmatrize abweichen. Die Aufgabe der erfindungsgemäßen Profilabschnitte besteht darin, während des Fügeprozesses eine lokal erhöhte Flächenpressung in den Fügebereichen hervorzurufen, um die gewünschten Eigenschaften der Fügenaht, insbesondere die Dichtheit und die Stabilität, zu gewährleisten. Die Aufgabe der übrigen Abschnitte der Andruckmatrize besteht im Wesentlichen darin, die zu fügenden Folienbahnen während des Fügeprozesses zu stabilisieren und beispielsweise eine Wellenbildung der Folienbahnen zu vermeiden. Exemplarisch werden die Andruckmatrize und die Impulsheizeinrichtung für den Fügevorgang derart aneinander angenähert, dass der Fügespalt zwischen Gegenhalter und Impulsheizeinrichtung, in dem die Folienbahnen aufgenommen sind, im Bereich der Andruckmatrize im Wesentlichen der Dicke der zu fügenden Folienbahnen entspricht. Im Bereich der erhaben von der Andruckmatrize abragenden Profilabschnitte ergibt sich damit ein Fügespalt, der kleiner als die Dicke der zu fügenden Folienbahnen ist. Hierdurch wird die gewünschte lokale Kompression der Folienbahnen erreicht. Vorzugsweise weist das Material des Andruckprofils eine um wenigstens 30 %, vorzugsweise um wenigstens 50 %, niedrigere Elastizität als das Material der Andruckmatrize auf.

Bevorzugt ist das Andruckprofil als austauschbarer Einsatz ausgebildet und die Andruckmatrize weist eine Ausnehmung zur Aufnahme des Andruckprofils auf. Der Profilabschnitt am Andruckprofil wird während des Fügevorgangs mit höheren mechanischen Belastungen als die übrige Andruckmatrize belastet. Somit ist es vorteilhaft, das Andruckprofil austauschbar zu gestalten. Dadurch muss im Verschleißfall lediglich ein Austausch des jeweiligen Andruckprofils erfolgen, während die übrige Andruckmatrize unverändert beibehalten werden kann. Hierzu ist es vorteilhaft, wenn die Andruckplatte eine Ausnehmung aufweist, die auf die Geometrie des Andruckprofils angepasst ist. Besonders bevorzugt ist das Andruckprofil derart kraftschlüssig und/oder formschlüssig in die Ausnehmung der Andruckplatte einsetzbar, dass keine zusätzlichen Verriegelungsmittel zur Arretierung des Andruckprofils in der Andruckplatte benötigt werden.

Bei einer Weiterbildung der Erfindung ist vorgesehen, dass sich ein Profilabschnitt entlang einer zumindest nahezu vollständig geschlossenen Profillinie, insbesondere in der Kontur eines Eurolochs, erstreckt, um eine Ausnehmung in den zu fügenden Folienbahnen zu erzeugen. Eine Ausnehmung in den Folienbahnen durch eine entsprechend gestaltete Fügenaht kann beispielsweise als Durchgriffsmöglichkeit zur Ausbildung eines Tragegriffs für eine aus den Folienbahnen gebildete Verpackung oder als Durchbruch zum Auffädeln von entsprechend gestalteten Verpackungen auf Haltedorne von Verkaufs-Displays dienen. Eine Variante hierbei kann vorsehen, dass die Ausnehmung als sogenanntes Euroloch gestaltet ist, das eine Anbringung von Folienbeuteln, die mit der erfindungsgemäßen Folienfügeeinrichtung aus Folienbahnen zur Verpackung von Gütern erzeugt wurden, an dornartigen oder bügelartigen Aufhängern, wie sie üblicherweise für Verkaufs-Displays genutzt werden, eingesetzt werden können. Derartige Durchbrüche oder Ausnehmungen in den Folienbahnen werden beim Stand der Technik mit einem beheizten oder unbeheizten Schneidmesser erzeugt. Bei einem Schneidvorgang mit dem Schneidmesser wird lediglich eine Durchtrennung der aufeinanderliegenden Folienbahnen, nicht jedoch eine funktional relevante Fügung der Folienbahnen im Randbereich der Ausnehmung hervorgerufen. Somit ergibt sich bei Folienbeuteln, die mittels einer aus dem Stand der Technik bekannten Folienfügeeinrichtung gefügt und mit einem Schneidmesser mit einer Ausnehmung versehen werden, die Notwendigkeit, eine Zone um die Ausnehmung herum durch zusätzliche Fügenähte abzudichten, um trotz der Ausnehmung eine Abdichtung des vom Folienbeutel umschlossenen Raumvolumens zu gewährleisten. Diese zusätzlichen Fügenähte benötigen zusätzliche Fügefläche und erhöhen somit den Folienverbrauch. Zudem stellt das scharf geschliffene Schneidmesser stets eine Gefahr für einen Bediener bei Wartungsarbeiten dar.

Dementsprechend ist es vorteilhaft, wenn eine Querschnittsgeometrie des zur Erzeugung der Ausnehmung vorgesehenen Profilabschnitts derart ausgebildet ist, dass eine randseitige Fügung, insbesondere eine abdichtende Fügung, der Folienbahnen im Bereich der Ausnehmung gewährleistet ist. Durch die randseitige Fügung im Bereich der Ausnehmung, bei der es sich vorzugsweise um eine abdichtende Fügung der Folienbahnen handeln kann, wird einerseits eine Stabilisierungswirkung für den Randbereich der Ausnehmung bewirkt. Dies wirkt sich bei der Handhabung von entsprechenden Folienbeuteln, die mit der Folienfügeeinrichtung aus Folienbahnen erzeugt wurden, als vorteilhaft aus. Dies gilt insbesondere dann, wenn die Folienbeutel auf Dorne oder Bügel von Verkaufs-Displays aufgefädelt werden müssen und mit einem Verpackungsinhalt gefüllt sind, der ein erhebliches Gewicht für die Folienbahnen darstellt. Zusätzlich kann bei einer abdichtenden Ausbildung der randseitigen Fügung auf zusätzliche Fügenähte um die Ausnehmung herum verzichtet werden. Durch den Verzicht auf derartige zusätzliche Fügenähte kann der Fügebereich um die Ausnehmung besonders kompakt gestaltet werden, so dass der Folienverbrauch für diesen Bereich geringer als beim Stand der Technik ist. Zudem ergibt sich durch die geringere Anzahl von Fügenähten ein exakter definierter Verlauf der Fügenähte, so dass diese mit größerer Sicherheit tatsächlich auch abdichtend ausgeführt werden können.

Die Aufgabe der Erfindung wird gemäß einem zweiten Aspekt der Erfindung durch einen Folienbeutel mit den Merkmalen des Anspruchs 8 erfüllt. Hierbei ist vorgesehen, dass der Folienbeutel zur Aufnahme eines Verpackungsguts vorgesehen ist und einen Folienschlauch umfasst, der an einem ersten Endbereich mit einer Bodennaht und an einem zweiten Endbereich mit einer Verschlussnaht versehen ist, die sich jeweils zumindest im Wesentlichen quer zu einer Schlauchlängsachse erstrecken und die ein vom Folienschlauch bestimmtes Raumvolumen endseitig begrenzen, wobei beabstandet zur Verschlussnaht eine gemeinsame Durchbrechung von aneinander liegenden Folienschlauchlagen vorgesehen ist, wobei die Durchbrechung randseitig abdichtend verschlossen ausgebildet ist. Mit einer derartigen Durchbrechung, die als Ausnehmung die wenigstens zwei aneinander liegenden Folienschlauchlagen durchsetzt und randseitig abdichtend ausgebildet ist, kann der erfindungsgemäße Folienbeutel im Bereich der Verschlussnaht besonders kompakt und damit foliensparend hergestellt werden. Durch die abdichtende Ausführung des Randbereichs der Durchbrechung wird gewährleistet, dass kein unerwünschter Austausch von umgebender Atmosphäre und einer im Folienbeutel herrschenden Atmosphäre, insbesondere Schutzgasatmosphäre, stattfindet. Dementsprechend wird eine Abdichtungswirkung des Folienbeutels durch die Ausnehmung nicht in Frage gestellt. Besonders vorteilhaft ist es, wenn die Bodennaht und die Verschlussnaht zusammen mit der Durchbrechung gleichzeitig mit Hilfe einer einzigen Folienfügeeinrichtung erzeugt werden können. Zweckmäßigerweise ergeben sich die Bodennaht und die Verschlussnaht jeweils als gegenüberliegende Hälften einer ersten Trennschweißnaht am Folienschlauch, während die Durchbrechung als zweite Trennschweißnaht ausgeführt ist.

Desweiteren ist hierbei vorgesehen, dass der Folienbeutel genau eine Bodennaht und/oder genau eine Verschlussnaht aufweist. Während es beim Stand der Technik üblich ist, um eine Durchbrechung oder Ausnehmung herum zusätzliche Verschlussnähte oder Bodennähte vorzusehen, um die gewünschte Abdichtwirkung zwischen der Durchbrechung oder Ausnehmung und dem im Folienbeutel eingeschlossenen Raumvolumen zu gewährleisten, ist erfindungsgemäß aufgrund der randseitigen Abdichtung der Durchbrechung oder Ausnehmung keine zusätzliche Abdichtmaßnahme um die Durchbrechung oder Ausnehmung herum erforderlich.

Die Aufgabe der Erfindung wird gemäß einem dritten Aspekt durch ein Verfahren zum Fügen von Folienbahnen gemäß dem Anspruch 9 gelöst. Hierbei ist die Verwendung einer Folienfügeeinrichtung vorgesehen, die eine Impulsheizeinrichtung und einen an die Impulsheizeinrichtung anpressbaren Gegenhalter umfasst, wobei die folgenden Schritte vorgesehen sind: Einlegen der Folienbahnen in einen Fügespalt zwischen Impulsheizeinrichtung und Gegenhalter, Verengen des Fügespalts durch eine Relativbewegung zwischen Impulsheizeinrichtung und Gegenhalter, lokales Fügen einander gegenüberliegender Folienbahnen durch Zufuhr thermischer Energie und Einleitung von Druckkräften, wobei die Folienbahnen linienförmig gefügt und im Fügebereich derart getrennt werden, dass die jeweils abgetrennten Fügebereiche abdichtend verschlossen sind und wobei sich eine erste Fügenaht über die gesamte Breite der Folienbahn erstreckt und eine zweite Fügenaht einen Durchbruch durch die aneinander liegenden Folienbahnen ausbildet, Abkühlen der Impulsheizeinrichtung und Abheben des Gegenhalters. Bei einer Weiterbildung des Verfahrens ist vorgesehen, dass eine Erwärmung der Impulsheizeinrichtung vor der Annäherung des Gegenhalters erfolgt.

Bei einer alternativen Weiterbildung des Verfahrens ist vorgesehen, dass eine Erwärmung der Impulsheizeinrichtung erfolgt, wenn der Gegenhalter auf der Impulsheizeinrichtung aufliegt und die Druckkräfte auf die Folienbahnen ausübt.

Eine vorteilhafte Ausführungsform der Erfindung ist in der Zeichnung dargestellt. Dabei zeigen:
- Figur 1: eine perspektivische Darstellung einer Folienfüge-einrichtung, die eine Impulsheizeinrichtung und einen gegenüberliegend angeordneten Gegenhalter umfasst,
- Figur 2: eine Explosionsdarstellung des Gegenhalters gemäß der Figur 1,
- Figur 3: eine perspektivische Darstellung einer Andruckmatrize,
- Figur 4: eine Seitenansicht der Andruckmatrize gemäß Fig. 3,
- Figur 5: eine perspektivische Darstellung einer ersten Ausführungsform eines austauschbaren Profilabschnitts,

- Figur 6: eine perspektivische Darstellung einer zweiten Ausführungsform eines austauschbaren Profilabschnitts,
- Figur 7: eine erste Ausführungsform eines mit der erfindungsgemäßen Folienfügeeinrichtung hergestellten Folienbeutels und
- Figur 8: eine zweite Ausführungsform eines mit der erfindungsgemäßen Folienfügeeinrichtung hergestellten Folienbeutels.

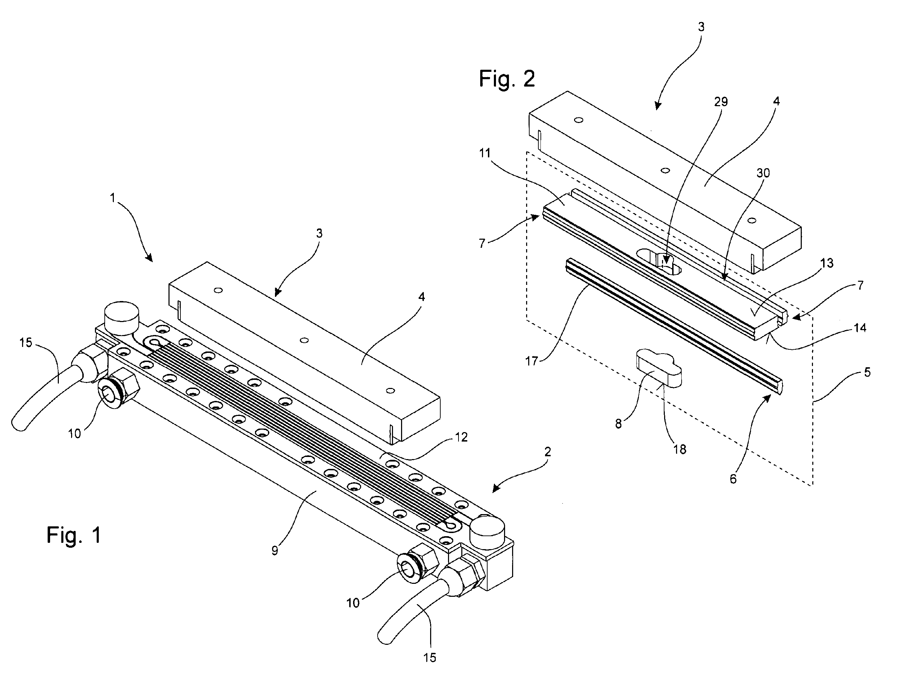

Eine in der Figur 1 dargestellte Folienfügeeinrichtung 1 umfasst eine Impulsheizeinrichtung 2 und einen der Impulsheizeinrichtung 2 gegenüberliegend angeordneten Gegenhalter 3. Die Folienfügeeinrichtung 1 ist zum Einbau in eine nicht dargestellte Folienschweißmaschine vorgesehen, bei der es sich beispielsweise um eine kombinierte Abfüll- und Verschlussmaschine handeln kann. In einer derartigen Folienschweißmaschine wird zunächst in einem ersten Schritt an einem nicht näher dargestellten, endlosen Folienschlauch mit Hilfe der Folienfügeeinrichtung 1 eine Bodennaht erzeugt und somit ein offener Folienschlauchbeutel geformt. Dieser wird anschließend mittels einer ebenfalls nicht dargestellten Befülleinrichtung mit einem Füllgut befüllt. Abschließend wird der Folienschlauchbeutel mit Hilfe der Folienfügeeinrichtung 1 an einem der Bodennaht entgegengesetzten Endbereich mit einer Verschlussnaht abdichtend, insbesondere hermetisch abdichtend, verschlossen.

Die Impulsheizeinrichtung 2 ist in bekannter Weise aufgebaut und umfasst einen Grundkörper 9, in dem abschnittsweise ein nicht näher dargestellter Fluidkanal ausgebildet ist. Jeweils endseitig am Grundkörper 9 sind Fluidanschlüsse 10 angeordnet, die für eine Zu- und Abfuhr von Kühlfluid in den Fluidkanal des Grundkörpers 9 vorgesehen dienen. Auf den Grundkörper 9 ist ein exemplarisch in keramischer Dickschichttechnik hergestelltes elektrisches Heizelement 12 aufgesetzt, das für die Bereitstellung der Heizenergie für den thermischen Fügevorgang der nicht näher dargestellten Folienbahnen ausgebildet ist. Das Heizelement 12 wird über am Grundkörper angeordnete Stromanschlüsse 15 mit elektrischer Energie versorgt und ermöglicht eine extrem schnelle Aufheizung ausgehend von einer Umgebungs- oder Raumtemperatur auf eine Zieltemperatur im Bereich zwischen 250 Grad Celsius und 350 Grad Celsius im Bruchteil einer Sekunde.

Der Gegenhalter 3 umfasst einen formstabilen Träger 4, bei dem es sich beispielsweise um ein Metallteil handeln kann. In einer aufgrund der gewählten Perspektive der Figuren 1 und 2 nicht sichtbaren, schachtartigen Ausnehmung des Trägers 4 ist eine in der Figur 2 näher dargestellte Andruckmatrize 5 austauschbar einsetzbar. Die Andruckmatrize 5 umfasst eine exemplarisch aus Silikonmaterial hergestellte Andruckplatte 11, die vorzugsweise zwei planparallel zueinander ausgerichtete größte Oberflächen 13, 14 aufweist. Die erste Oberfläche 13 ist zur flächigen Anlage in der schachtartigen Ausnehmung des Trägers 4 vorgesehen. Die zweite Oberfläche 14 dient zur flächigen Anlage an der Oberfläche des Heizelements 12, das eine Arbeitsfläche bildet, insbesondere an nicht dargestellten Folienbahnen, die auf das Heizelement 12 aufgelegt sind.

Bei einer nicht dargestellten Ausführungsform der Andruckmatrize ist wenigstens eine der größten Oberflächen mit einem grossen Krümmungsradius als Zylinderabschnitt oder Kugelabschnitt konvex ausgebildet.

Exemplarisch sind an der Andruckplatte 11 an einander entgegengesetzten Stirnseiten jeweils erhaben ausgebildete Verriegelungsprofile 7 vorgesehen, die eine formschlüssige Verriegelung der Andruckplatte 11 in korrespondierend geformten Nuten in der schachförmigen Ausnehmung des Trägers 4 ermöglichen.

Die Andruckmatrize 5 umfasst zudem ein Andruckprofil 6 und ein Eurolochprofil 8, die exemplarisch jeweils als separate Einsätze ausgebildet sind und in entsprechende Ausnehmungen 29, 30 der Andruckplatte 11 aufgenommen werden können. Sowohl das Andruckprofil 6 als auch das Eurolochprofil 8 weisen an einer der Impulsheizeinrichtung 2 zugewandten Oberfläche jeweils nachfolgend näher dargestellte Profilabschnitte auf 17, 18, die für eine lokale Kompression der zwischen die Impulsheizeinrichtung 2 und den Gegenhalter 3 aufnehmbaren, nicht näher dargestellten Folienbahnen vorgesehen sind.

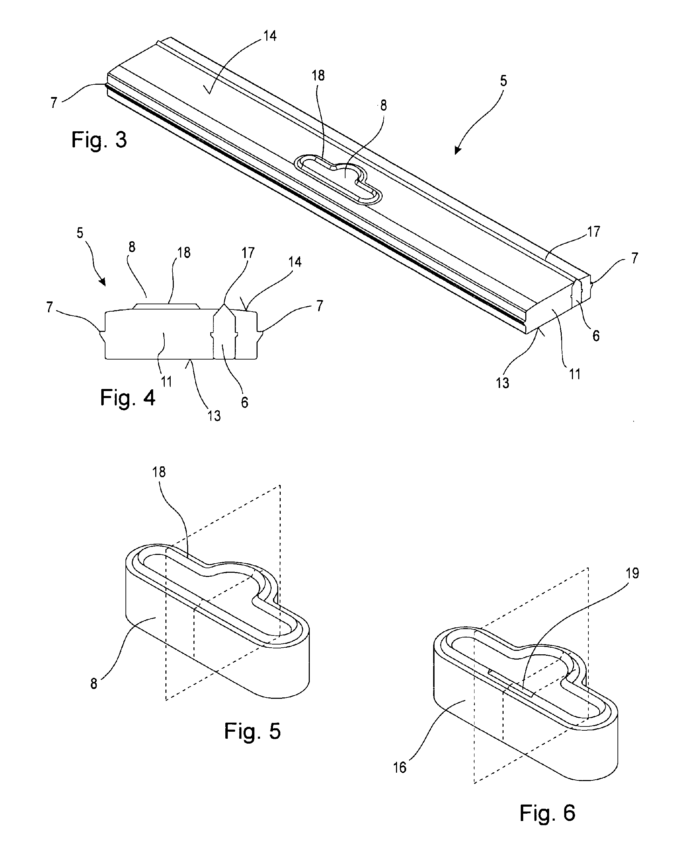

Wie aus den Figuren 3 und 4 hervorgeht, ragen die an dem Andruckprofil 6 und dem Eurolochprofil 8 ausgebildeten Profilabschnitte 17, 18 erhaben von der Oberfläche 14 der Andruckplatte 11 ab. Vorzugsweise sind sowohl das Andruckprofil 6 als auch das Eurolochprofil 8 aus einem elastischen Kunststoffmaterial, insbesondere Silikon, hergestellt. Exemplarisch weist dieses Silikonmaterial eine geringere Elastizität als das Material, insbesondere Silikonmaterial, der Andruckplatte 11 auf. Hierdurch kann bei der Übertragung von Druckkräften auf die nicht dargestellten Folienbahnen sichergestellt werden, dass im Bereich des Andruckprofils 6 und des Eurolochprofils 8 eine deutlich höhere Flächenpressung auf die Folienbahnen ausgeübt wird, als dies im übrigen Bereich der Oberfläche 14 der Andruckplatte 11 der Fall ist.

Exemplarisch sind bei der in Figur 4 dargestellten Ausführungsform der Andruckmatrize 5 der Querschnitt der Profilabschnitte 17 und 18 gleichartig ausgeführt.

Aus der Figur 5 geht eine erste Variante des Eurolochprofils 8 hervor, das als Einsatz aus einem Material mit geringerer Elastizität in die Andruckplatte 11, wie sie beispielsweise in der Figur 2 dargestellt ist, einsetzbar ist. Bei dieser Variante weisen sämtliche Profilabschnitte 18 den gleichen Querschnitt auf und bewirken somit neben einer randseitigen Verschweißung der Ausnehmung ein vollständiges Austrennen des entsprechenden Folienschlauchbereichs aus dem zu erzeugenden Folienbeutel.

Bei der Ausführungsform gemäß Figur 6 ist ein Profilabschnitt 19 des Eurolochprofils 16 für die Erzeugung eines Flachnahtabschnitts ausgebildet, während die übrigen nicht näher bezeichneten Profilabschnitte für die Erzeugung einer Trennnaht ausgebildet sind. Hierdurch ist gewährleistet, dass der Folienabschnitt, der sich durch die Trennnaht im Bereich der Durchbrechung oder Ausnehmung ergibt, weiterhin fest mit dem Folienbeutel verbunden bleibt.

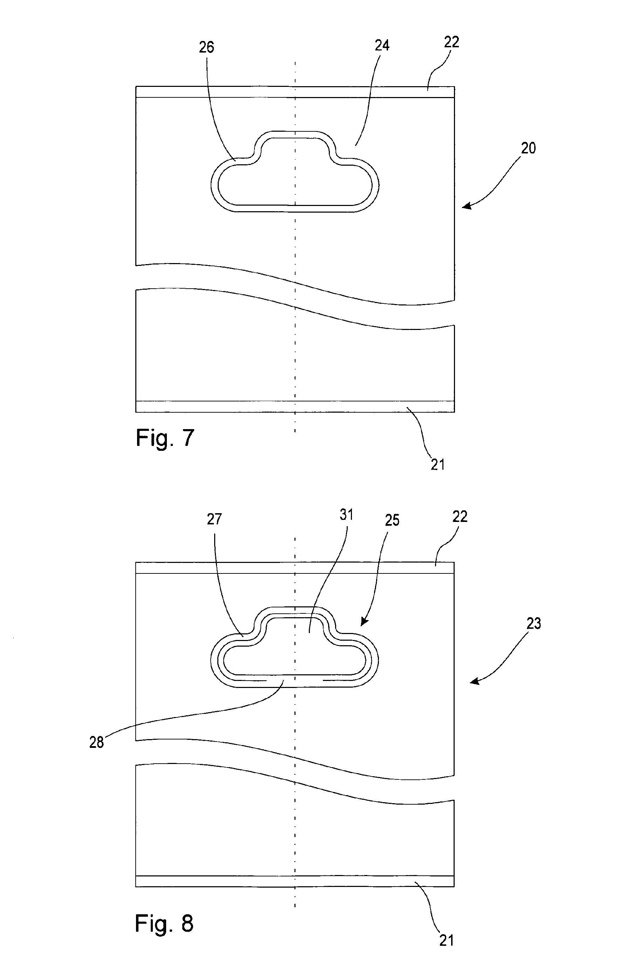

Bei der in Figur 7 dargestellten ersten Ausführungsform eines Folienbeutels 20 ist an einem unteren Endbereich exemplarisch genau eine Bodennaht 21 vorgesehen. Weiterhin ist an einem oberen Endbereich ebenfalls exemplarisch genau eine Verschlussnaht 22 vorgesehen. Beabstandet zur Verschlussnaht 22 ist eine Ausnehmung 24 ausgebildet, die die wenigstens zwei nicht näher dargestellten Folienlagen des Folienschlauchs durchsetzt, der den Folienbeutel 20 bildet. Die Ausnehmung 24 ist mit dem Eurolochprofil 8 gemäß der Figur 5 hergestellt, das eine umlaufende Fügenaht 26 um die Ausnehmung 24 erzeugt. Diese Fügenaht 26 ist entlang ihrer gesamten Erstreckung als Trennnaht ausgebildet, so dass der von der Fügenaht 26 begrenzte Folienabschnitt vollständig entfernt werden kann, ohne dass hierzu ein separates Schneidmesser erforderlich ist und ein dem Schweißvorgang nachfolgender Schneidevorgang vorgesehen werden muss.

Demgegenüber sind bei der in Figur 8 dargestellten zweiten Ausführungsform eines Folienbeutels 23 zwar ebenfalls exemplarisch jeweils genau eine Bodennaht 21 und genau eine Verschlussnaht 22 vorgesehen. Jedoch ist die Ausnehmung 25 bereichsweise von einer als Trennnaht 27 ausgebildeten Fügenaht und bereichsweise von einer Flachnaht 28 berandet, so dass der Folienabschnitt 31 innerhalb der Ausnehmung 25 weiterhin fest mit dem übrigen Folienbeutel 23 verbunden ist und nicht bei der Herstellung des Folienbeutels 23 entsorgt werden muss. Auch bei dieser Ausführungsform ist kein separates Schneidmesser erforderlich, ein dem Schweißvorgang nachfolgender Schneidevorgang ist ebenfalls nicht erforderlich.

Bei beiden in den Figuren 7 und 8 dargestellten Ausführungsformen eines Folienbeutels 20, 23 ist die jeweilige Ausnehmung 24, 25 aufgrund der umlaufenden Fügenaht 26, 27/28 hermetisch abdichtend ausgebildet, so dass keine zusätzlichen Fügenähte um die Ausnehmung 24, 25 erzeugt werden müssen, um eine Abdichtfunktion des Folienbeutels 20, 23 zu gewährleisten.

## Patentansprüche

1. Folienfügeeinrichtung mit einer Impulsheizeinrichtung (2) zur Temperierung von zu fügenden Folienbahnen und mit einem Gegenhalter (3) zur Übertragung von Druckkräften auf die Folienbahnen, wobei die Impulsheizeinrichtung (2) eine temperierbare Arbeitsfläche zur Auflage der zu fügenden Folienbahnen sowie der Arbeitsfläche zugeordnete elektrische Heizmittel (12) umfasst, wobei der Gegenhalter (3), der zur Anlage an der temperierbaren Arbeitsfläche ausgebildet ist, einen formstabilen Träger (4) und eine daran abgestützte, flexible Andruckmatrize (5) mit einer geometrisch an die Arbeitsfläche angepassten Andruckoberfläche (14) umfasst und mit der Arbeitsfläche einen variabel einstellbaren Fügespalt begrenzt und wobei an der Andruckmatrize (5) ein erhaben ausgebildetes Andruckprofil (6, 8; 16) vorgesehen ist, das für eine lokale Kompression der zu fügenden, zwischen Arbeitsfläche und Andruckmatrize (5) einzulegenden Folienbahnen ausgebildet ist, **dadurch gekennzeichnet, dass** das Andruckprofil (6, 8; 16) mehrere Profilabschnitte (17, 18; 19) aufweist, die beabstandet zueinander angeordnet und für eine Erzeugung wenigstens zweier linienförmiger Fügenähte (21, 22; 26; 27, 28) an den Folienbahnen ausgebildet sind.

2. Folienfügeeinrichtung nach Anspruch 1, **dadurch gekennzeichnet, dass** ein Profilabschnitt (17, 18; 19) zumindest bereichsweise gekrümmt ausgebildet ist, um eine bereichsweise gekrümmte Fügenaht (21, 22; 26; 27, 28) an der Folienbahn auszubilden.

3. Folienfügeeinrichtung nach Anspruch 1 oder 2, **dadurch gekennzeichnet, dass** wenigstens eines der Andruckprofile (6, 8; 16) aus einem Material hergestellt ist, dessen Materialeigenschaften, insbesondere Elastizitätseigenschaften, von Materialeigenschaften der umgebenden Andruckplatte (11) abweichen.

4. Folienfügeeinrichtung nach einem der vorhergehenden Ansprüche, **dadurch gekennzeichnet, dass** das Material des Andruckprofils (6, 8; 16) eine um wenigstens 30 %, vorzugsweise um wenigstens 50 %, niedrigere Elastizität als das Material der Andruckplatte (11) aufweist.

5. Folienfügeeinrichtung nach einem der vorhergehenden Ansprüche, **dadurch gekennzeichnet, dass** das Andruckprofil (6, 8; 16) als austauschbarer Einsatz ausgebildet ist und dass die Andruckplatte (11) eine Ausnehmung (29, 30) zur Aufnahme des Andruckprofils (6, 8; 16) aufweist.

6. Folienfügeeinrichtung nach einem der vorhergehenden Ansprüche, **dadurch gekennzeichnet, dass** sich ein Profilabschnitt (18; 19) entlang einer zumindest nahezu vollständig geschlossenen Profillinie, insbesondere in der Kontur eines Eurolochs, erstreckt, um eine Ausnehmung (24; 25) in den zu fügenden Folienbahnen zu erzeugen.

7. Folienfügeeinrichtung nach Anspruch 6, **dadurch gekennzeichnet, dass** eine Querschnittsgeometrie des zur Erzeugung der Ausnehmung (24; 25) vorgesehenen Profilabschnitts (18; 19) derart ausgebildet ist, dass eine randseitige Fügung, insbesondere eine abdichtende Fügung, der Folienbahnen im Bereich der Ausnehmung (24, 25) gewährleistet ist.

8. Folienbeutel zur Aufnahme eines Verpackungsguts, umfassend einen Folienschlauch, der an einem ersten Endbereich mit einer Bodennaht (21) und an einem zweiten Endbereich mit einer Verschlussnaht (22) versehen ist, die sich jeweils zumindest im Wesentlichen quer zu einer Schlauchlängsachse erstrecken und die ein vom Folienschlauch bestimmtes Raumvolumen endseitig begrenzen, wobei beabstandet zur Verschlussnaht (22) eine gemeinsame Durchbrechung (24, 25) von aneinander anliegenden Folienschlauchlagen vorgesehen ist und die Durchbrechung (24, 25) randseitig abdichtend verschlossen ausgebildet ist und wobei genau eine Bodennaht (21) und/oder genau eine Verschlussnaht (22) vorgesehen sind.

9. Verfahren zum Fügen von Folienbahnen mit einer Folienfügeeinrichtung (1), die eine Impulsheizeinrichtung (2) und einen an die Impulsheizeinrichtung (2) anpressbaren Gegenhalter (3) umfasst, **gekennzeichnet durch** die Schritte: Einlegen der Folienbahnen in einen Fügespalt zwischen Impulsheizeinrichtung (2) und Gegenhalter (3), Verengen des Fügespalts **durch** eine Relativbewegung zwischen Impulsheizeinrichtung (2) und Gegenhalter (3), lokales Fügen einander gegenüberliegender Folienbahnen **durch** Zufuhr thermischer Energie und Einleitung von Druckkräften, so dass die Folienbahnen linienförmig gefügt und gegebenenfalls im Fügebereich derart getrennt werden, dass die jeweils abgetrennten Fügebereiche abdichtend verschlossen sind, wobei sich eine erste Fügenaht (21, 22) über die gesamte Breite der Folienbahn erstreckt und eine zweite Fügenaht (24, 25) einen Durchbruch **durch** die aneinander liegenden Folienbahnen ausbildet, Abkühlen der Impulsheizeinrichtung (2) und Abheben des Gegenhalters (3).

10. Verfahren nach Anspruch 9, **dadurch gekennzeichnet, dass** eine Erwärmung der Impulsheizeinrichtung (2) vor der Annäherung des Gegenhalters (3) erfolgt.

11. Verfahren nach Anspruch 9, **dadurch gekennzeichnet, dass** eine Erwärmung der Impulsheizeinrichtung (2) erfolgt, wenn der Gegenhalter (3) auf der Impulsheizeinrichtung (2) aufliegt und die Druckkräfte auf die Folienbahnen ausübt.
